# EUROPEAN PATENT SPECIFICATION

(11) **EP 0 455 843 B1**
(45) Date of publication and mention of the grant of the patent: **26.10.1994**
(21) Application number: 90108536.5
(22) Date of filing: 07.05.1990
(51) Int. Cl.: B60R 1/10

(54) **Rear view lens apparatus for automotive vehicle**
Rückblickapparat für Kraftfahrzeuge
Appareil de rétrovision pour véhicules automobiles

(43) Date of publication of application: 13.11.1991
(73) Proprietor: Ou, Jan-Chou, Taipei (TW)
(72) Inventor: Ou, Jan-Chou, Taipei (TW)
(74) Representative: von Puttkamer, Nikolaus, Dipl.-Ing. Patentanwälte Haft, von Puttkamer Berngruber, Czybulka

(56) References cited:
- DE-A- 2 330 275
- FR-A- 90 684
- GB-A- 473 539
- GB-A- 1 217 223
- PATENT ABSTRACTS OF JAPAN, vol. 4, no. 60 (M-10)[542], 23rd February 1980, page 38 M 10; & JP-A-55 25 665 (HIROKO YABANETA) 06-05-1980

## Description

This invention relates to an viewing means for an automotive vehicle.

A conventional internal rear view mirror in a vehicle usually has a visual restriction, i.e., it cannot cover the area closely behind the rear bumper. This "BLIND" spot to the vision of a driver usually extends five meters or more of ground space beyond the rear bumper. Side mirrors on the door usually cannot provide a rear view behind the rear bumper at all. The existing of this "BLIND" spot makes driving reverse awkward or even hazardous.

Many different devices have been proposed to resolve this problem before. Some of them tried to use an optical conduit containing convex lenses and mirrors fixed under the roof ot the car. For instance such an optical conduit is disclosed in JP-A-55-25665 (Abstract) which corresponds to the preamble of claim 1. This optical conduit is bulky in size and severely interfere with the movements of the driver and passengers in the vehicle. Other known devices use optical tubes or channels to be built under vehicle top or run through vehicle body (e.g. GB-A-1 217 223 or FR-A-90 684), which would significantly change vehicle body structure and become problematic in installation. Still other known devices use a TV camera and a TV monitor to serve this need. However the high costs of such a device has limited its use to very few luxury coach. Very few of the known device have achieved practical and commercial significance. The needs for providing an effective and economic way for a car driver to get a clear rear view behind a car is still not widely fulfilled until today.

It is therefore an object of the present invention to provide an optical viewing means to enable a driver of a vehicle to see areas closely behind a rear bumper which are usually not visible, so that the driver can drive in reverse more effectively, with less guess work and more safely.

It is another object of the present invention to provide an optical viewing means in a compact and largely self-contained unit which can be installed in a vehicle without sigificant change of vehicle body structure.

According to the invention there is provided a viewing means for an automotive vehicle according to claim 1.

It is an advantage of the present invention that most of the elements of the present viewing means are arranged in the rear trunk compartment. Therefore these elements do not interfere with the movements of car driver and passengers in the vehicle.

It is a further advantage of the invention that the present optical viewing means projects the final image at a convenient viewing position to the car driver and allows the driver to see the rear view readily without additional movement.

The present invention embodying these objects and advantages comprises several forms and embodiments, all of which utilize an elongated optical conduit in which a plurality of convex lenses have been purposefully distanced from each other so that the rear view behind the vehicle can be captured, transmitted and formed into an enlarged and upright final image in the front portion of the optical conduit. A reflecting means and a reflecting mirror are provided to direct the final image to a location which is readily visible to the car driver.

An embodiment of this invention is described by way of example, with reference to the drawings.
Fig. 1 is a schematic side view of a vehicle showing visual coverage afforded by conventional internal and external mirrors.
Fig. 2 is a schematic top view of a vehicle showing visual coverage afforded by conventional internal and external mirrors.
Fig. 3 is a schematic side view of the embodiments of the present invention, showing the range of visual coverage on a vehicle.
FIG. 4 is a fragmentary cutaway side view of an embodiment of the present invention.
FIG. 5 is a top view of the embodiment of the present invention as shown in FIG. 4.
FIG. 6 is a top view of another embodiment of the present invention.
FIG. 7 is a fragmentary cutaway side view of the embodiment of the present invention as shown in FIG. 6.
FIG. 8 is a fragmentary rear view of the embodiment of the present invention shown in FIG. 6.

Referring to the drawings, similar or corresponding components are designated by like reference numerals or characters throughout the various figures.

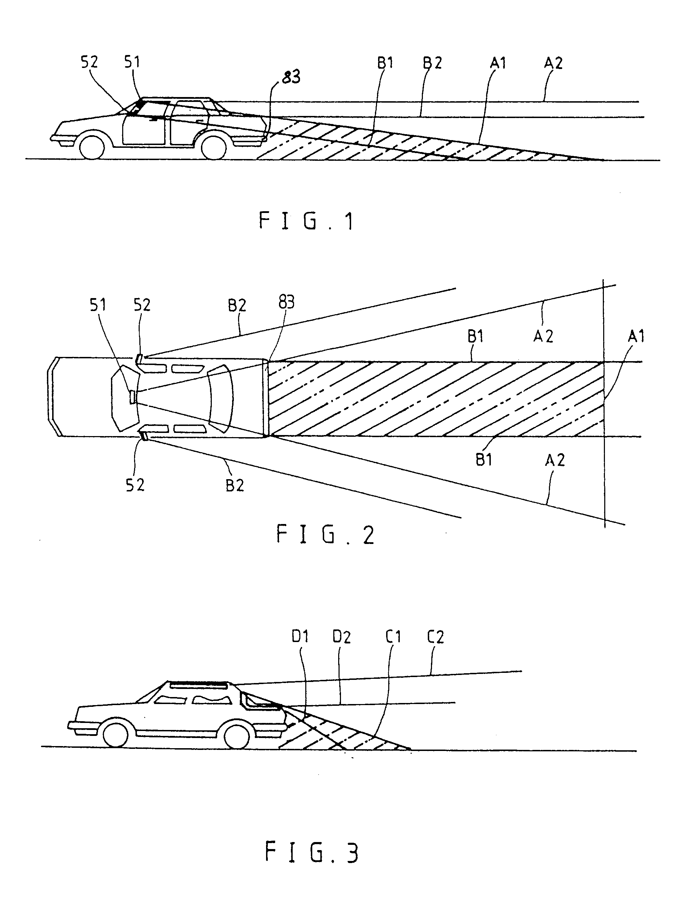

FIGS.1 and 2 illustrate the rear visual coverage area of a typical automobile, including a "BLIND" spot shown by a shaded portion. This "BLIND" spot usually is not visible by a driver through conventional internal or external rear view mirrors. A1 and A2 show the visual boundary of an internal rear view mirror. 51,B1 and B2 show the visual boundary of the external rear view mirrors 52. The resultant "BLIND" spot behind the vehicle usually cover five meters or more of ground space from rear bumper 83 to boundary A1.

FIG.3 illustrates the rear visual coverage area after adopting the present invention. Depending on the focal lengths of the lenses being used and different types of embodiments, the "BLIND" spot can be reduced to one meter or less.

D1 and D2 depict the rear visual boundary of an embodiment which is placed in the rear trunk compartment.

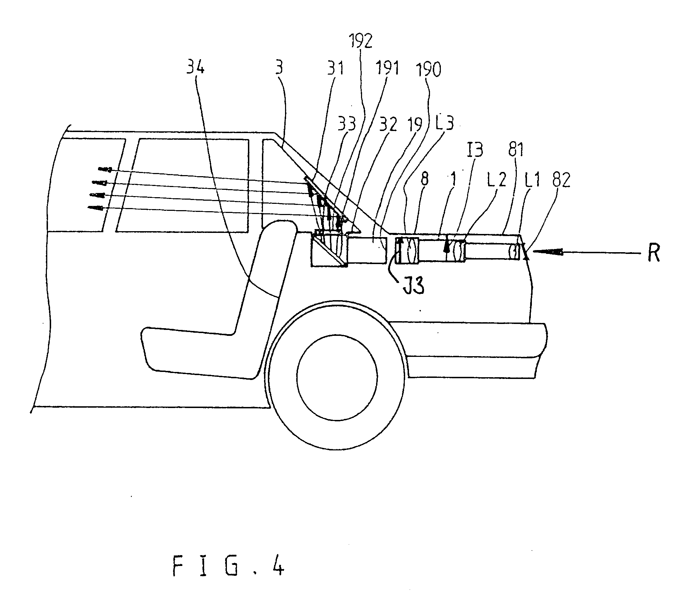

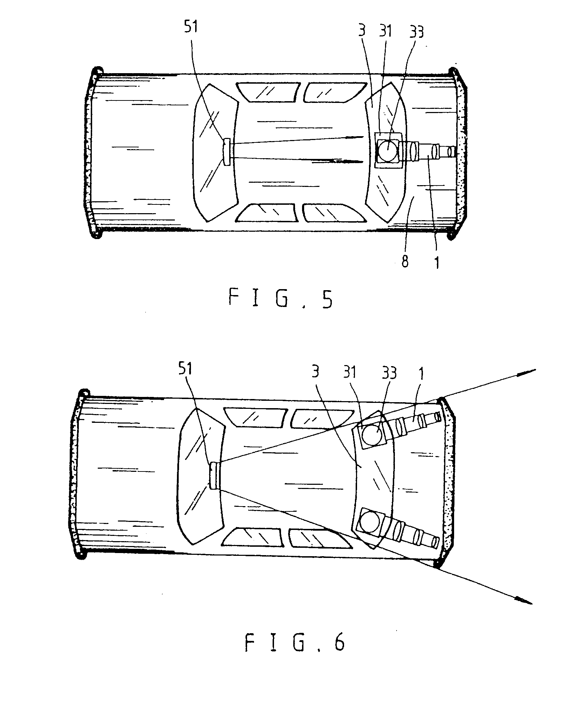

FIG. 4 and 5 illustrate an embodiment of the present invention,preferably for vehicle with a rear trunk compartment 8,comprising an optical conduit 1, which is centrally and longitudinally affixed underneath a trunk lid 81, a multiple number of convex lenses L1, L2, L3 being disposed within said optical conduit 1, wherby the object lens L1 faces an rear opening 82 on a rear lateral wall of the trunk lid 81, a hollow tube 19 which is placed longitudinally under the rear window shelf 32 and having its rear opening 190 facing the front opening of the optical conduit 1. There is a top opening 192 on the hollow tube 19 which faces a rear window shelf opening 33 on the rear window shelf 32. In the hollow tube 19 there is arranged an inclinded reflecting mirror 191 with its surface facing both the rear opening 190 and top opening 192. An inclined reflecting sheet 31 is attached to the rear window 3 and above rear the rear window shelf opening 33,whereby the real image I3 of the rear view R is formed in the optical conduit 1 and is then reflected twice on the reflecting mirror 191 and on the reflecting sheet 31, and eventually reaching the internal rear view mirror 51. Thus a driver can look at mirror 51 to see the image I3 of rear view R, which is otherwise not visible.

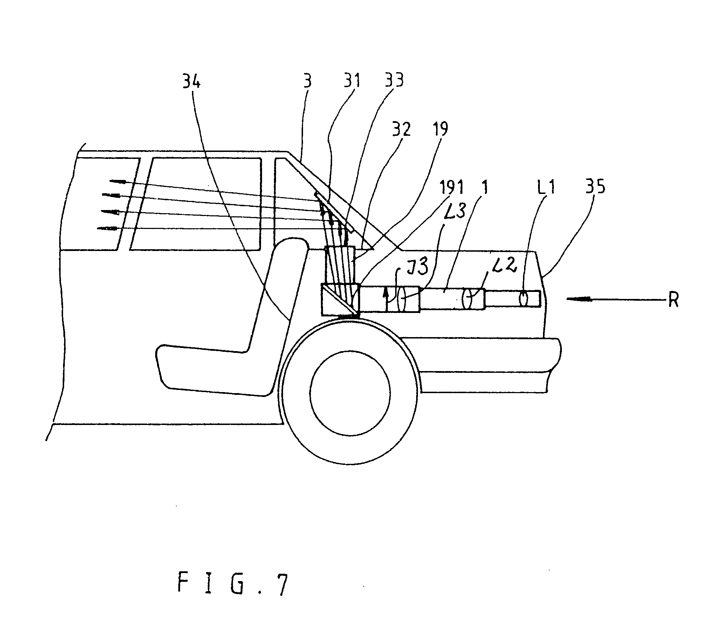

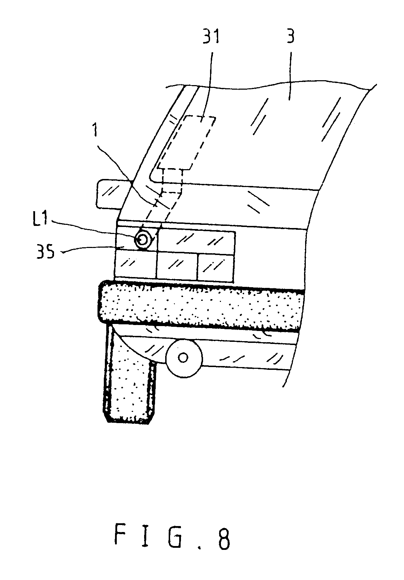

Figs.6, 7 and 8 illustrate another embodiment of the present invention, similar to that shown in figs. 4 and 5; except that instead of placing an optical conduit 1 underneath trunk lid 81 , two optical conduits 1 are disposed longitudinally along both side walls of a rear trunk compartment 8. The rear opening of the optical conduit 1 and the object lens L1 point toward an opening in the rear lamp combination 35 and thereby can capture rear view R to form a real and upright image I3. A hollow tube 19 connects the front end of optical conduit 1 and is located under a rear window shelf 32. An inclined reflecting mirror 191 is arranged inside hollow tube 19 with its surface facing the front opening of optical conduit 1 and a rear window shelf opening 33. A reflecting sheet 31 is attached to the rear window 3 above the rear window shelf opening 33. Thereby image I3, upon reflecting twice on mirror 191 and reflecting sheet 31, will reach the internal rear view mirror 51, thus enabling the driver of the vehicle to see the rear view R.

## Claims

1. A viewing means for an automotive vehicle enabling a driver in said vehicle to see a rear end view (R) behind said vehicle, including at least one optical conduit (1), a plurality of convex lenses (L1, L2, L3) disposed in said optical conduit (1), a hollow tube (19) with a reflecting mirror (191) disposed inside for reflecting and directing an image to a reflecting means (31), said optical conduit (1) being fixable such that a rear end of said optical conduit (1) faces rear and a front end of said optical conduit (1) faces an opening of said hollow tube (19), said convex lenses (L1, L2, L3) are so disposable that said rear end view (R) of said vehicle will form a real and upright image (I3) in a front section of said optical conduit (1), whereby said image (I3) will be reflected to said driver via said hollow tube (19) and said reflecting means (31), characterized in that said rear end of said optical conduit (1) faces a rear opening (82) of a rear trunk compartement (8) of said vehicle, said reflection means (31) being disposed on the inside of a rear window (3) of said vehicle and above a rear window shelf opening (33) of said vehicle and said hollow tube (19) being disposed under said rear window shelf opening (33).

2. A viewing means according to claim 1, characterized by one optical conduit (1) being fixed centrally and longitudinally to an underside of a section of a rear trunk lid (81), such that the rear end of said optical conduit (1) face a rear opening (82) of said trunk lid (81).

3. A viewing means according to claim 1, characterized by two optical conduits (1), each being fixed longitudinally along a side wall of said rear trunk compartment (8) such that the rear end of each optical conduit (1) faces a rear opening (82) of said rear trunk compartment (8).

4. A viewing means according to claim 3, characterized by the rear opening (82) being an opening in the rear lamp combination (35) of said vehicle.

## Patentansprüche

1. Blickapparat für ein Kraftfahrzeug, der einen Fahrer des Fahrzeuges in die Lage versetzt, eine rückwärtige Endansicht (R) hinter dem Fahrzeug zu sehen, mit wenigstens einer optischen Leitungsanordnung (1), einer Mehrzahl von konvexen Linsen (L1, L2, L3), die in der optischen Leitungsanordnung (1) angeordnet sind, einem hohlen Rohr (19) mit einem darin angeordneten Reflexionsspiegel (191) zum Reflektieren eines Bildes und Leiten desselben auf eine Reflexionseinrichtung (31), wobei die optische Leitungsanordnung (1) derart befestigbar ist, daß ein rückwärtiges Ende der optischen Leitungsanordnung (1) nach rückwärts gerichtet ist und ein vorderes Ende der optischen Leitungsanordnung (1) einer Öffnung des hohlen Rohres (19) zugewandt ist, wobei die konvexen Linsen (L1, L2, L3) so anordenbar sind, daß die rückwärtige Endansicht (R) des Fahrzeuges ein reelles und aufrechtes Bild (I3) in einem vorderen Bereich der optischen Leitungsanordnung (1) bildet, wobei das Bild (I3) zum Fahrer über das hohle Rohr (19) und die Reflexionseinrichtung (31) reflektiert wird, dadurch gekennzeichnet, daß das rückwärtige Ende der optischen Leitungsanordnung (1) einer hinteren Öffnung (82) eines hinteren Kofferraumes (8) des Fahrzeuges zugewandt ist, daß die Reflexionseinrichtung (31) an der Innenseite eines rückwärtigen Fensters (3) des Fahrzeuges und oberhalb einer Öffnung (43) der rückwärtigen Fensterablage des Fahrzeuges angeordnet ist und daß das hohle Rohr (19) unterhalb der Öffnung (33) der rückwärtigen Fensterablage angeordnet ist.

2. Blickapparat nach Anspruch 1, dadurch gekennzeichnet, daß eine optische Leitungsanordnung (1) mittig und in Längsrichtung an einer Unterseite eines Bereiches eines rückwärtigen Kofferraumdeckels (81) derart befestigt ist, daß das rückwärtige Ende der optischen Leitungsanordnung (1) einer rückwärtigen Öffnung (82) des Kofferraumdeckels (81) zugewandt ist.

3. Blickapparat nach Anspruch 1, dadurch gekennzeichnet, daß zwei optische Leitungsanordnungen (1) vorgesehen sind, von denen jede in Längsrichtung entlang einer Seitenwand des rückwärtigen Kofferraumes (8) derart befestigt ist, daß das rückwärtige Ende jeder optischen Leitungsanordnung (1) einer rückwärtigen Öffnung (82) des Kofferraumes (8) zugeordnet ist.

4. Blickapparat nach Anspruch 3, dadurch gekennzeichnet, daß die rückwärtige Öffnung (82) eine Öffnung in der rückwärtigen Lampeneinheit (35) des Fahrzeuges ist.

## Revendications

1. Moyen d'observation destiné à un véhicule automobile qui permet au conducteur dudit véhicule de voir une vue (R) d'extrémité arrière en arrière dudit véhicule, qui comprend au moins un conduit optique (1), une pluralité de lentilles convexes (L₁, L₂, L₃) placées dans ledit conduit optique (1), un tube creux (19) avec un miroir réfléchissant (191) placé à l'intérieur pour réfléchir et diriger une image vers un moyen réfléchissant (31), ledit conduit optique (1) pouvant être fixé de telle sorte que l'extrémité arrière dudit conduit optique (1) soit orientée vers l'arrière et que l'extrémité avant dudit conduit optique (1) soit en vis-à-vis d'une ouverture dudit tube creux (19), lesdites lentilles convexes (L₁, L₂, L₃) peuvent être placées de telle sorte que ladite vue (R) d'extrémité arrière dudit véhicule forme une image (I₃) réelle et droite dans une partie avant dudit conduit optique (1), ce qui fait que ladite image (I₃) va être réfléchie vers le conducteur par l'intermédiaire dudit tube creux (19) et dudit moyen réfléchissant (31), caractérisé en ce que ladite extrémité arrière dudit conduit optique (1) est en face d'une ouverture arrière (82) du compartiment formant coffre arrière (8) dudit véhicule, ledit moyen réfléchissant (31) étant disposé sur l'intérieur de la lunette arrière (3) dudit véhicule et au-dessus d'une ouverture (33) de la plage de lunette arrière dudit vétucule et ledit tube creux (19) étant disposé sous ladite ouverture (33) de la plage de lunette arrière.

2. Moyen d'observation selon la revendication 1, caractérisé par le fait qu'un seul conduit optique (1) est fixé de façon centrale et dans le sens longitudinal au dessous d'une partie du capot (81) de coffre arrière de telle sorte que l'extrémité arrière dudit conduit optique (1) est en face d'une ouverture arrière (82) dudit capot (81) de coffre arrière.

3. Moyen d'observation selon la revendication 1, caractérisé par deux conduits optiques (1) dont chacun est fixé longitudinalement le long d'une paroi latérale dudit compartiment formant coffre arrière (8) de telle sorte que l'extrémité arrière de chaque conduit optique (1) soit en face d'une ouverture arrière (82) dudit compartiment formant coffre arrière (8).

4. Moyen d'observation selon la revendication 3, caractérisé par le fait que l'ouverture arrière (82) est une ouverture dans l'ensemble (35) des feux arrières dudit véhicule.
